# FASCICULE DE BREVET EUROPEEN

(11) **EP 3 079 230 B1**
(45) Date de publication et mention de la délivrance du brevet: **09.01.2019**
(21) Numéro de dépôt: 16164285.5
(22) Date de dépôt: 07.04.2016
(51) Int. Cl.: H02K 1/20, H02K 9/193, B23K 11/31, B23K 11/36, B23K 11/24, H02K 5/20, H02K 9/19

(54) **PINCE A SOUDER ET SON MOTEUR ELECTRIQUE**
SCHWEISSZANGE UND IHR ELEKTROMOTOR
WELDING CLAMP AND ELECTRIC MOTOR THEREOF

(30) Priorité: 09.04.2015 FR 1553077
(43) Date de publication de la demande: 12.10.2016
(73) Titulaire: FTS Welding, 37510 Ballan Mire (FR)
(72) Inventeur: CACHEUX, Philippe, 92120 MONTROUGE (FR); JOUCGNOUX, Damien, 37130 MAZIERE DE TOURAINE (FR)
(74) Mandataire: Ipside

(56) Documents cités:
- EP-A1- 2 378 631
- WO-A1-02/094496
- DE-A1- 19 948 043
- US-A- 3 009 072
- US-A1- 2004 012 272
- US-A1- 2013 285 485

## Description

L'invention concerne une pince à souder et son moteur électrique, plus particulièrement le dispositif de protection et refroidissement du moteur électrique.

Une pince à souder est un dispositif, généralement monté sur un robot, qui permet de souder par points des pièces, telles que des tôles, sous de très forts courants, de l'ordre de 10 000 à 25 000 A.

Une pince à souder, telle que décrite dans la demande de brevet DE 199 48 043, comporte deux bras dont chaque extrémité libre est pourvue d'une électrode de soudage. Au moins l'un des bras est mobile afin d'assurer un écartement nécessaire au positionnement des deux pièces à souder. Une fois les pièces à souder agencées entre les deux électrodes, une force de serrage est appliquée aux bras pour maintenir serrées les pièces l'une contre l'autre et assurer le soudage via le passage d'un très fort courant d'une électrode à l'autre.

Afin de rendre mobile l'un des bras et de permettre un serrage conséquent, la pince est dotée d'un moteur électrique, tel que décrit dans la demande de brevet WO 02/094496.

Le moteur électrique est nécessairement associé à des moyens de refroidissement, tels que décrits dans les demandes de brevet US 3 009 072, US 2013/285485, US 2004/012272 et EP 2 378 631, qui sont actuellement formés par une double enveloppe cylindrique en acier inoxydable, l'enveloppe interne logeant le moteur et étant espacée d'une seconde paroi formant l'enveloppe externe, de l'eau circulant entre les deux parois pour assurer le refroidissement.

Cependant, le matériau constitutif en inox de l'enveloppe ainsi que la structure en tant que telle de cette double enveloppe alourdissent le moteur et conduisent à un prix de fabrication du moteur onéreux.

En outre, afin d'assurer la maintenance d'un moteur associé à ce type de moyens de refroidissement, le démontage et le remontage sont de mise en oeuvre longue et laborieuse. En particulier, cela impose à l'opérateur de nombreux gestes de dévissage/vissage pour d'une part démonter/remonter et débrancher/rebrancher les connexions électriques externes et les branchements externes d'arrivée d'eau qui sont solidaires du corps du moteur, et d'autre part désolidariser/remonter mécaniquement le moteur du corps de pince.

L'invention a donc pour but de fournir une pince à souder intégrant un moteur électrique logé dans un carter qui est doté de moyens de refroidissement ne présentant pas les inconvénients précités. En particulier, l'invention conduit à un moteur moins lourd et procurant des facilités de montage/démontage vis-à-vis d'une part du corps de la pince à souder, et d'autre part des connexions électriques et d'alimentation pour le refroidissement.

Selon l'invention, la pince à souder est selon la revendication 1.

La chemise constitue une paroi unique entre l'intérieur du carter logeant le stator en regard, et l'extérieur du carter.

L'utilisation d'une unique chemise ou enveloppe, et l'association des moyens de refroidissement, en particulier en aluminium, et directement au stator procurent un carter et donc un moteur, et par conséquent une pince, moins lourds et moins encombrants.

Les moyens de refroidissement sont formés de contenants qui sont associés, en particulier rendus solidaires du corps (de la paroi) du stator.

Les moyens de refroidissement sont intégrés au corps du stator.

Avantageusement, les moyens de refroidissement sont en laiton.

Quant à l'enveloppe ou chemise, elle n'a pas besoin d'être en acier inoxydable comme dans l'art antérieur car elle n'est pas en contact avec un liquide, le liquide circulant dans les contenants associés à la paroi du stator. La chemise est avantageusement en aluminium, ce qui est moins onéreux et permet en outre d'alléger le carter.

Le rotor du moteur électrique est logé dans l'espace creux délimité par le stator qui est de forme cylindrique.

Selon une caractéristique, le stator comporte sur la face externe de son corps en regard de la chemise des logements d'accueil recevant les moyens de refroidissement.

Les logements d'accueil sont obtenus lors de la fabrication du stator. De préférence, le corps du stator est fabriqué selon un empilement de tôles, comprenant avant empilement et solidarisation des tôles, les découpes idoines.

La face externe du corps du stator en regard de la chemise comporte par exemple une pluralité de rainures espacées, de préférence s'étendant selon l'axe longitudinal du stator, et logeant les moyens de refroidissement qui se présentent sous forme de tubes.

De manière préférée, les moyens de refroidissement comprennent des tubes (constituant des contenants) raccordés les uns aux autres pour former un serpentin continu et s'étendant depuis une entrée jusqu'à une sortie, de préférence agencées l'une à côté de l'autre.

De préférence, les moyens de refroidissement sont rendus solidaires du corps du stator et de la chemise par des moyens de collage du type résine de surmoulage.

Selon une autre caractéristique, les moyens de refroidissement comprennent des pièces de raccordement qui sont internes au carter et débouchent vers l'extérieur du carter en affleurant la face externe du carter ou en faisant légèrement saillie à celle-ci, lesdites pièces étant conçues pour procurer un raccordement rapide, du type par encliquetage, avec des conduites externes au carter et au moteur.

Par ailleurs, le moteur électrique comporte une connexion électrique du type câbles, raccordée au stator et débouchant à l'extérieur du carter, de préférence la connexion électrique étant agencée à proximité des pièces de raccordement des moyens de refroidissement.

Ainsi, la fixation et le raccordement des moyens de refroidissement se font extrêmement aisément et rapidement, l'opérateur n'ayant qu'ensuite à raccorder les câbles électriques à une alimentation électrique et verrouiller la fixation du carter du moteur, par exemple par quelques vis.

Le corps de la pince à souder et le carter du moteur électrique comportent des moyens d'engagement mécanique mutuel pour la fixation du carter (donc du moteur) sur le corps de la pince, le raccordement des moyens de refroidissement à des conduites agencées dans le corps se faisant également par engagement mutuel et concomitamment à la fixation du carter (et donc du moteur).

Dans la suite de la description, les qualificatifs « supérieur », « inférieur », d'un élément sont utilisés dans le cadre d'une installation normale du moteur, c'est-à-dire relatif à l'agencement du moteur en position d'utilisation de la pince.

Dans la suite de la description, les termes « externe » et « interne » qualifient des éléments respectivement tournés en direction de l'extérieur et l'intérieur du moteur.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective partielle d'une pince à souder intégrant un moteur électrique selon l'invention ;
- La figure 2 est une vue en perspective du moteur seul, une fois démonté de la pince, ou prêt à être remonté ;
- La figure 3 est une vue en perspective et de dessus du carter avec son extrémité distale ouverte ;
- La figure 4 est une vue partielle en perspective et opposée à la vue de la figure 3 ;
- La figure 5 est une vue en perspective et éclatée du stator et des moyens de refroidissement ;
- La figure 6 est une vue en perspective du stator associé aux moyens de refroidissement ;
- La figure 7 est vue en perspective de l'arrière du moteur en position montée et en coupe verticale au niveau des raccords des moyens de refroidissement et d'arrivée d'eau jusqu'à ces raccords ;
- La figure 8 est vue en perspective de l'arrière du moteur en position montée et en coupe verticale au niveau des câbles raccordement électrique
- La figure 9 est une vue partielle en coupe longitudinale du moteur.

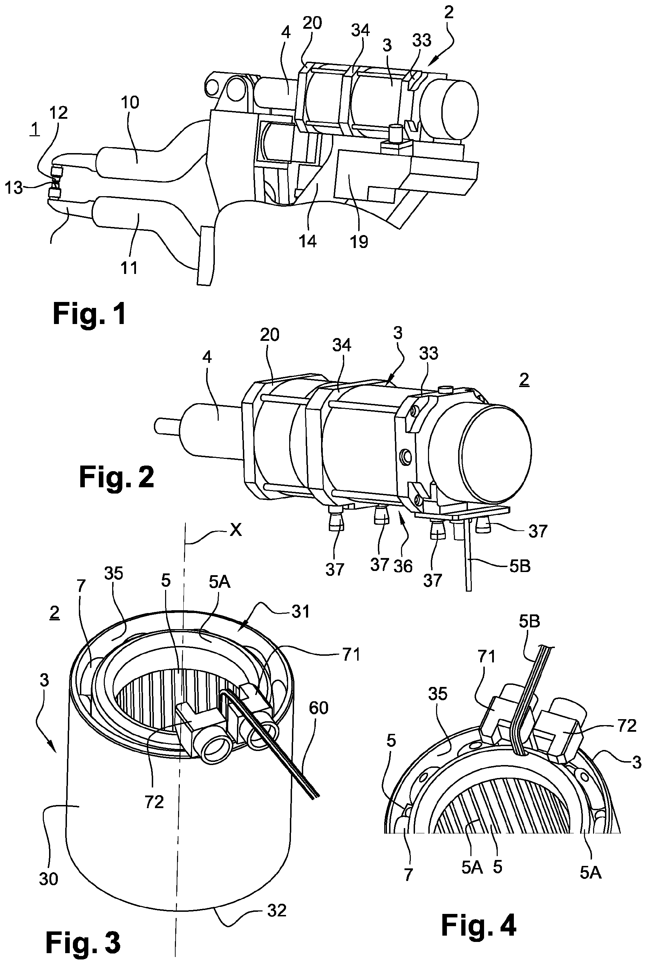

La pince à souder 1 illustrée partiellement sur la figure 1 comporte deux bras 10 et 11 écartés l'un de l'autre, deux électrodes de soudage 12 et 13 solidaires respectivement des extrémités libres des bras 10 et 11, et un moteur électrique 2 monté dans la partie supérieure du corps de pince 14.

Les autres éléments connus de la pince et leur agencement, dont notamment le transformateur qui alimente les électrodes, n'ont pas été illustrés ni décrits car ne participant pas à l'invention.

En regard des figures 1 et 2, le moteur 2 est associé à un dispositif de protection et refroidissement formant un carter fermé 3 de géométrie allongée et cylindrique, le carter logeant le stator et le rotor du moteur ainsi que des moyens de refroidissement.

L'extrémité distale 20 du moteur en regard du bras supérieur 10 comporte de manière connue une tige 4 reliée d'une part à l'intérieur du moteur, au rotor, et d'autre part à l'opposé, au bras de soudage 10 de manière à le manoeuvrer.

Selon l'invention, en regard de la figure 3, le carter 3 comporte, pour loger le stator et le rotor du moteur, une unique enveloppe cylindrique 30 d'axe longitudinal X, ouverte en ses extrémités 31 et 32, qui constitue la chemise de l'ensemble stator-rotor.

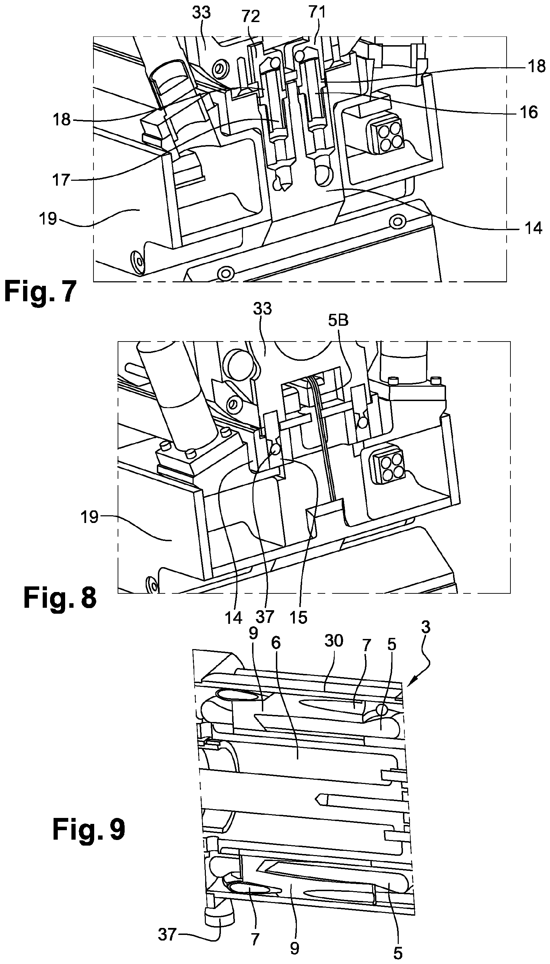

En regard de la figure 9, l'enveloppe cylindrique 30 loge le stator 5 et le rotor 6 du moteur ainsi que des moyens de refroidissement 7.

En regard des figures 3 et 4, seuls le stator 5 et les moyens de refroidissement 7 sont rendus solidaires (de l'enveloppe cylindrique 30) du carter 3. L'ensemble est avantageusement fabriqué isolément du rotor, l'assemblage avec le rotor et l'obturation des deux extrémités 31 et 32 pouvant être réalisé ultérieurement.

L'obturation des extrémités 31 et 32 de l'enveloppe 30, est réalisée de manière connue pour le carter d'un tel moteur par deux pièces 33 et 34 (figures 1 et 2) qui par ailleurs logent avantageusement des roulements, ces derniers étant associés au rotor pour sa rotation.

L'enveloppe ou chemise 30 n'a pas besoin d'être en acier inoxydable comme dans l'art antérieur car elle n'est pas en contact avec un liquide. Elle est avantageusement en aluminium, qui est moins onéreux que l'acier et en outre permet d'alléger le carter. Son épaisseur est par exemple de 3 mm.

En regard, des figures 3 et 4, à l'intérieur de l'enveloppe 30 sont agencés le stator 5 associé aux moyens de refroidissement 7, ces derniers étant en regard de la face interne 35 de l'enveloppe. Le stator 5 est cylindrique et creux pour loger le rotor 6 tel qu'illustré sur la figure 9.

Selon l'invention, au carter sont associés des raccords 71 et 72 d'alimentation et respectivement de sortie des moyens de refroidissement 7. Les extrémités 31 et 32 de l'enveloppe 30 du carter sont fermées, seuls des câbles électriques 5B pour la connexion électrique du moteur et les raccords 71 et 72 sortent à l'extérieur (de l'enveloppe) du carter au niveau de sa face inférieure 35 en position prête au montage sur le corps de pince (figure 2).

Selon l'invention, le moteur 2 est extrêmement aisé et rapide à monter et démonter mécaniquement du corps de pince 14 et à brancher/débrancher électriquement tout en connectant/déconnectant facilement et promptement ses moyens de refroidissement.

En effet:
- le moteur comporte sur son corps une pluralité des pattes ou plots 37 en saillie de sa face inférieure 36 (figure 2) qui sont aptes à coopérer avec des trous d'accueil 15 de forme complémentaire agencés dans le corps de pince (figure 8) ;
- de simples câbles électriques 5B dépassent du moteur, qu'on branche/débranche simplement au niveau d'un boîtier de connexion électrique 19 situé sur le corps de pince 14 ;
- les raccords 71 et 72 d'alimentation et de sortie du liquide de refroidissement qui forment des raccords rapides qui, lors de l'introduction des plots 37 dans les trous d'accueil 15, s'engagent directement dans deux conduites respectives d'alimentation et de sortie 16 et 17 agencées à l'intérieur du corps de pince (figures 3 et 7). Des joints toriques d'étanchéité 18 sont prévus à l'extrémité de conduites 16 et 17 et coopérant avec les raccords 71 et 72 en position enfoncée (de blocage) de ces derniers.

Par conséquent, il suffit d'encliqueter les plots de fixation 37 du moteur dans le corps de pince 14 pour assurer le branchement de l'arrivée et la sortie du liquide de refroidissement aux moyens de refroidissement. Il suffit ensuite de brancher électriquement les câbles sortants 5B. Des moyens de verrouillage, tels que des vis traversant le corps de pince 14 et la partie inférieure du carter 3 logeant le moteur, peuvent être prévus pour assurer un maintien solidaire du carter 3, donc du moteur, au corps de pince.

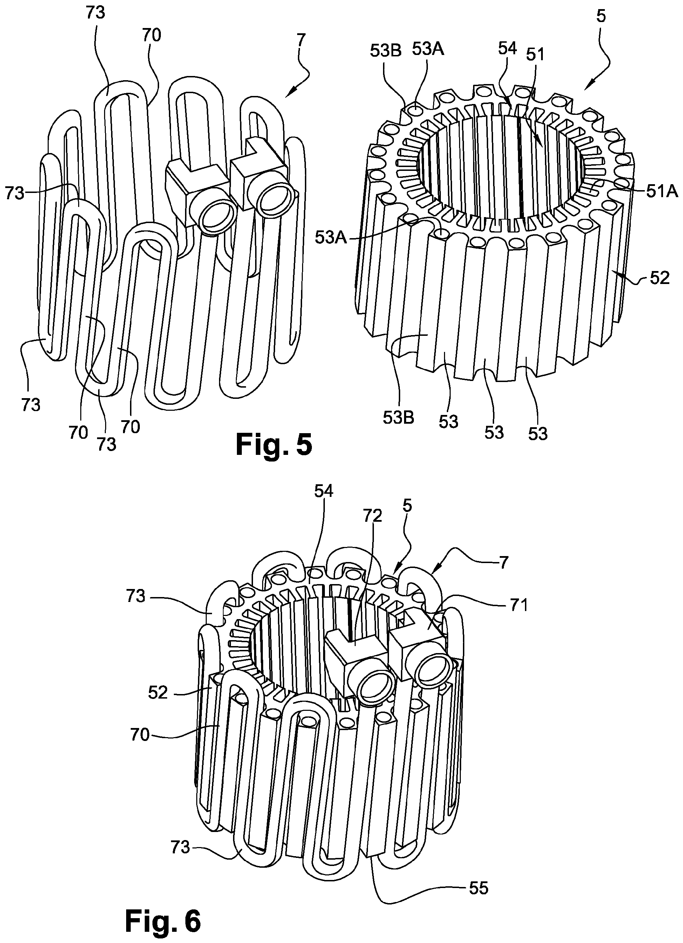

En regard des figures 5 et 6, le stator 5 du moteur présente un corps à paroi annulaire 50 constituant le circuit magnétique du moteur.

La face interne 51 de la paroi 50 comporte des gorges longitudinales 51A qui permettent d'accueillir, tel qu'illustré sur la figure 3, le bobinage 5A du stator 5.

Le stator 5 est de manière connue creux et cylindrique, sa paroi étant formée par un bobinage. Pour sa connexion électrique, il comporte les câbles de connexion 5B.

Selon l'invention, le stator 5 comporte sur la face externe 52 de sa paroi 50 des logements d'accueil 53 pour recevoir les moyens de refroidissement 7.

Les logements d'accueil 53 sont ménagés dans l'épaisseur de la paroi 50 du stator.

De préférence, les logements d'accueil 53 forment une pluralité de rainures parallèles et espacées les unes des autres.

De préférence, elles s'étendent selon l'axe longitudinal X du stator (figure 3) et donc du moteur.

Pour gagner en poids du stator et donc du moteur, l'épaisseur de la paroi 50 est avantageusement percée longitudinalement en 53A au droit des nervures 53B séparant les rainures 53.

Les moyens de refroidissement 7 sont logés dans les rainures 53 de sorte à ne pas faire saillie au-delà de la face externe 52 de la paroi du stator.

Les moyens de refroidissement 7 comprennent des tubes 70 dans lesquels un liquide de refroidissement tel de l'eau est destiné à circuler.

Les tubes 70 sont reliés les uns aux autres pour former un circuit continu entre une entrée 71 et une sortie 72 qui constituent les raccords pour respectivement l'alimentation et la sortie du liquide. Le sens de circulation du liquide se fera en fonction des conduites externes d'alimentation et de sortie. Ainsi, l'entrée 71 et la sortie 72 des moyens de refroidissement peuvent être inversées.

Avantageusement, les raccords d'entrée 71 et de sortie 72 sont agencés à proximité l'un de l'autre pour faciliter leur raccordement aux conduites d'alimentation 16 et de retour 17 (figure 7) du liquide de refroidissement.

En outre, par commodité de passage et de connexion des câbles électriques 5B du moteur dans le corps de pince 14 en combinaison avec le raccordement rapide des entrées 71 et 72 dans le corps de pince, les câbles 5B connectés au stator 5 débouchent à proximité des deux raccords 71 et 72 (figures 3 et 4).

Dans le mode de réalisation préféré illustré sur les figures 3 à 6, les tubes 70 forment un serpentin dont les boucles 73 font saillie hors des faces opposées d'extrémité 54 et 55 du corps du stator 5.

D'autres variantes de structure et de disposition des moyens de refroidissement 7 peuvent être conçues telles que des tubes longilignes réunis par deux couronnes opposées, ou des tubes annulaires répartis autour de la paroi longitudinale du stator, etc.

A titre d'exemple, pour assurer un refroidissement efficace, les tubes 70 présentent un diamètre de 7 mm et sont espacés selon un entraxe de l'ordre de 16 mm pour un stator 5 de diamètre 110 mm, et dont la paroi présente une épaisseur de l'ordre de 0,5 à 1 mm.

Le diamètre de l'enveloppe 30 est tel que le stator 5 doit être monté en contact étroit avec la surface interne 35 de l'enveloppe afin qu'il évite de tourner lors du fonctionnement du rotor et soit ainsi maintenu fermement et dans l'alignement de l'axe rotatif du rotor.

De préférence, le maintien est garanti par la solidarisation du stator 5 à la surface interne 35 de l'enveloppe 30, en particulier par collage via de la résine 8 coulée le long de ladite face interne 35 de l'enveloppe (figure 9). La résine permet en quelque sorte de surmouler les tubes 70 des moyens de refroidissement 7 dans leurs logements 53 ainsi que la face externe 52 du stator.

De plus, la résine assure avantageusement par conductivité thermique une répartition tout autour du stator et sur sa face externe 52, du froid apporté par le liquide circulant dans les tubes 70 des moyens de refroidissement.

## Revendications

1. Pince à souder (1) comportant un moteur électrique (2) qui comporte un carter (3) logeant un stator (5), un rotor (6), et des contenants de refroidissement (7) dans lesquels un liquide de refroidissement est destiné à circuler, la pince (1) présentant un corps (14), le carter (3) formant une chemise unique (30) enveloppant le stator (5) et constituant une paroi unique entre l'intérieur du carter et l'extérieur du carter, la chemise (30) étant en aluminium, **caractérisé en ce que** le stator (5) comporte sur la face externe (52) de son corps en regard de la chemise (30) des logements d'accueil (53), comprenant une pluralité de rainures espacées s'étendant selon l'axe longitudinal du stator recevant les contenants de refroidissement (7), **en ce que** les contenants de refroidissement (7) sont des tubes formant un serpentin continu et s'étendant depuis une entrée jusqu'à une sortie et comprennent des pièces de raccordement (71, 72) qui sont internes au carter (3) et débouchent vers l'extérieur du carter (3) en affleurant la face externe du carter (3) ou en faisant légèrement saillie à celle-ci, lesdites pièces (71, 72) étant conçues pour procurer un raccordement rapide, par encliquetage, avec des conduites externes, **en ce que** le corps (14) de la pince à souder (1) et le carter (3) comportent des moyens d'engagement mécanique mutuel (37, 15) pour la fixation du carter (3) sur ledit corps (14), le raccordement des contenants de refroidissement (7) à des conduites (16, 17) agencées dans le corps (14) se faisant également par engagement mutuel et concomitamment à la fixation du carter (3), **en ce que** le corps du moteur (2) comporte une pluralité des pattes ou plots (37) qui sont aptes à coopérer avec des trous d'accueil (15) de forme complémentaire agencés dans le corps de pince (14), et **en ce que** lors de l'introduction des plots (37) du moteur dans les trous d'accueil (15) du corps de pince, les pièces de raccordement (71, 72) s'engagent directement dans deux conduites respectives d'alimentation et de sortie (16, 17) agencées à l'intérieur du corps de pince.

2. Pince à souder selon l'une quelconque des revendications précédentes, **caractérisée en ce que** les contenants de refroidissement (7) sont rendus solidaires du corps du stator (5) et de la chemise (30) par des moyens de collage du type résine de surmoulage.

3. Pince à souder selon l'une quelconque des revendications précédentes, **caractérisée en ce qu'**il comporte une connexion électrique (5B) du type câbles, raccordée au stator (5) et débouchant à l'extérieur du carter (3), de préférence la connexion électrique (5B) étant agencée à proximité des pièces de raccordement (71, 72) des contenants de refroidissement.

4. Pince à souder (1) selon l'une quelconque des revendications précédentes, **caractérisée en ce que** le moteur (2) comporte des câbles électriques (5B) dépassant qui sont branchés au niveau d'un boîtier de connexion électrique (19) situé sur le corps de pince (14).

## Patentansprüche

1. Schweißzange (1), umfassend einen Elektromotor (2), der ein Gehäuse (3) umfasst, in dem ein Stator (5), ein Rotor (6) und Kühlbehälter (7) untergebracht sind, in denen eine Kühlflüssigkeit dazu bestimmt ist, zu zirkulieren, wobei die Zange (1) einen Körper (14) aufweist, wobei das Gehäuse (3) eine einzige Hülle (30) bildet, die den Stator (5) umschließt und eine einzige Wand zwischen dem Inneren des Gehäuses und dem Äußeren des Gehäuses ausmacht, wobei die Hülle (30) aus Aluminium ist, **dadurch gekennzeichnet, dass** der Stator (5) an der äußeren Seite (52) seines Körpers der Hülle (30) zugewandt Aufnahmelager (53) umfasst, die eine Vielzahl von sich gemäß der Längsachse des Stators erstreckenden, beabstandeten Rillen umfassen, die die Kühlbehälter (7) aufnehmen, dadurch, dass die Kühlbehälter (7) Rohre sind, die eine durchgehende Schlange bilden und sich ab einem Einlass bis zu einem Auslass erstrecken und Anschlussteile (71, 72) umfassen, die sich innerhalb des Gehäuses (3) befinden und unter Berühren der äußeren Seite des Gehäuses (3) oder unter leichtem Vorspringen von demselben zum Äußeren des Gehäuses (3) hin münden, wobei die Teile (71, 72) dafür konzipiert sind, einen Schnellanschluss durch Verrasten mit äußeren Leitungen bereitzustellen, dadurch, dass der Körper (14) der Schweißzange (1) und das Gehäuse (3) Mittel zum gegenseitigen mechanischen Eingreifen (37, 15) für das Befestigen des Gehäuses (3) am Körper (14) umfassen, wobei der Anschluss der Kühlbehälter (7) an Leitungen (16, 17), die im Körper (14) angeordnet sind, ebenfalls durch gegenseitiges Eingreifen und gleichzeitig mit dem Befestigen des Gehäuses (3) erfolgt, dadurch, dass der Körper des Motors (2) eine Vielzahl von Füßen oder Ansätzen (37) umfasst, die dazu in der Lage sind, mit Aufnahmeöffnungen (15) von komplementärer Form zusammenzuwirken, die im Zangenkörper (14) angeordnet sind, und dadurch, dass beim Einführen der Ansätze (37) des Motors in die Aufnahmeöffnungen (15) des Zangenkörpers die Anschlussteile (71, 72) direkt in zwei jeweilige Zu- und Ablaufleitungen (16, 17) eingreifen, die im Inneren des Zangenkörpers angeordnet sind.

2. Schweißzange nach einem der vorstehenden Ansprüche, **dadurch gekennzeichnet, dass** die Kühlbehälter (7) über Klebemittel vom Typ Umspritzharz fest mit dem Körper des Stators (5) und mit der Hülle (30) verbunden sind.

3. Schweißzange nach einem der vorstehenden Ansprüche, **dadurch gekennzeichnet, dass** sie eine elektrische Verbindung (5B) vom Kabeltyp umfasst, die an den Stator (5) angeschlossen ist und außen am Gehäuse (3) mündet, wobei die elektrische Verbindung (5B) vorzugsweise in Nähe der Anschlussteile (71, 72) der Kühlbehälter angeordnet ist.

4. Schweißzange (1) nach einem der vorstehenden Ansprüche, **dadurch gekennzeichnet, dass** der Motor (2) überstehende elektrische Kabel (5B) umfasst, die im Bereich einer elektrischen Verbindungsdose (19) angeschlossen sind, welche sich am Zangenkörper (14) befindet.

## Claims

1. Soldering gun (1) comprising an electric motor (2) that comprises a casing (3) housing a stator (5), a rotor (6), and cooling containers (7) in which a coolant is intended to circulate, the gun (1) having a body (14), the casing (3) forming a single jacket (30) surrounding the stator (5) and constituting a single wall between the inside of the casing and the outside of the casing, the jacket (30) being made from aluminium, **characterised in that** the stator (5) comprises on the outer face (52) of its body facing the jacket (30) receiving housings (53), comprising a plurality of spaced grooves extending along the longitudinal axis of the stator receiving the cooling containers (7), **in that** the cooling containers (7) are tubes that form a continuous pipe coil and extending from an inlet to an outlet and comprise connecting parts (71, 72) that are internal to the casing (3) and open towards the outside of the casing (3) flush with the outer face of the casing (3) or slightly protruding at the latter, said parts (71, 72) being designed to procure a fast connection, via snap-fitting, with outer ducts, **in that** the body (14) of the soldering gun (1) and the casing (3) comprise means for the mutual mechanical engagement (37, 15) for the fastening of the casing (3) onto said body (14), the connecting of the cooling containers (7) to ducts (16, 17) arranged in the body (14) also being accomplished via mutual engagement and simultaneous to the fastening of the casing (3), **in that** the body of the motor (2) comprises a plurality of brackets or lugs (37) that are able to cooperate with receiving holes (15) of complementary shape arranged in the gun body (14), and **in that** during the introduction of the lugs (37) of the motor into the receiving holes (15) of the gun body, the connecting parts (71, 72) engage directly into two respective feed and outlet ducts (16, 17) arranged inside the gun body.

2. Soldering gun according to any preceding claim, **characterised in that** the cooling containers (7) are rendered integral with the body of the stator (5) and with the jacket (30) by means of gluing of the overmoulding resin type.

3. Soldering gun according to any preceding claim, **characterised in that** it comprises an electrical connection (5B) of the cable type, connected to the stator (5) and opening outside the casing (3), preferably the electrical connection (5B) being arranged in the vicinity of the connecting parts (71, 72) of the cooling containers.

4. Soldering gun (1) according to any preceding claim, **characterised in that** the motor (2) comprises electrical cables (5B) that exceed which are connected at the level of an electrical connection box (19) located on the gun body (14).
